**Europäisches Patentamt**

**European Patent Office**

**Office européen des brevets**

(19)

(11) Numéro de publication: **0 007 835**
**B1**

(12) **FASCICULE DE BREVET EUROPEEN**

(45) Date de publication du fascicule de brevet: **30.12.81**

(21) Numéro de dépôt: **79400463.0**

(22) Date de dépôt: **05.07.79**

(51) Int. Cl.³: **B 01 D 5/00,** B 01 D 53/26,
B 01 D 1/26, B 01 D 1/28,
C 25 B 1/00

(54) **Procédé pour séparer un gaz et une vapeur condensable et ses applications.**

(30) Priorité: **07.07.78 FR 7820363**

(43) Date de publication de la demande:
**06.02.80 Bulletin 80/3**

(45) Mention de la délivrance du brevet:
**30.12.81 Bulletin 81/52**

(84) Etats Contractants Désignés:
**BE CH DE GB IT NL SE**

(56) Documents cités:
FR - A - 1 347 558
FR - A - 1 579 110

(73) Titulaire: **C E M COMPAGNIE ELECTRO
MECANIQUE Société Anonyme
12, rue Portalis
F-75008 Paris (FR)**

(72) Inventeur: **Sterlini, Jacques
7, rue du Mail
F-75002 Paris (FR)**

(74) Mandataire: **Harlé, Robert et al,
c/o Cabinet Harlé & Lechopiez 21, rue de la
Rochefoucauld
F-75009 Paris (FR)**

Courier Press, Leamington Spa, England.

# Procédé pour séparer un gaz et une vapeur condensable et ses applications

La présente invention est relative à la séparation d'un gaz et d'une vapeur de fluide condensable présent dans ledit gaz.

Le problème de la séparation d'un gaz chaud contenant une vapeur condensable, en particulier de l'air contenant de la vapeur d'eau, se rencontre dans de nombreuses applications, soit qu'il s'agisse de déssécher de l'air en vue de le recycler dans un processus de séchage industriel, soit qu'il s'agisse de débarrasser un gaz produit dans un processus à haute température et qui sort de ce processus chargé de vapeur d'eau. C'est le cas notamment dans la production d'hydrogène par électrolyse à haute température.

Dans les procédés classiques de production d'hydrogène, les cellules d'électrolyse fonctionnent habituellement à une température voisine de 80°C, de sorte que la pression partielle de vapeur d'eau provenant de la mise en contact de l'hydrogène avec le bain d'électrolyte est relativement faible. Pour séparer cette vapeur de l'hydrogène, il suffit de faire passer le courant gazeux sur un faisceau réfrigérant; dans ces conditions, la quantité de chaleur perdue, correspondant à la chaleur latente de vaporisation de l'eau, n'est pas suffisamment importante pour abaisser notablement le rendement global.

Pour accroître le rendement des cellules d'électrolyse et diminuer le coût des investissements par kg d'H2 produit, il est maintenant envisagé de produire l'hydrogène à une température de l'ordre de 200°C et à une pression de l'ordre de 30 bars. La pression partielle de vapeur d'eau due à la présence de la solution concentrée d'électrolyte est alors voisine de 10 bars, l'abaissement de la pression partielle due à la concentration en électrolyte étant voisin de 6 bars. La perte de la chaleur latente de cette vapeur d'eau produite en même temps que l'hydrogène ferait baisser notablement le rendement de l'électrolyse, si l'on ne récupérait pas dans un processus thermodynamique adéquat la majeure partie de cette chaleur latente au cours de la séparation.

On connaît des procédés et des dispositifs pour la mise en oeuvre optimale de certains processus thermodynamiques qui sont décrits par exemple dans les brevets FR 75 114 38 (publié sous le n° 2 307 227) FR 76 149 65 (publié sous le n° 2 352 247) et FR 77 070 41 (publié sous le n° 2 383 411). Ces brevets ont pour objet des systèmes qui seront dénommés ci-après "machines polytropiques".

Ces machines sont constituées d'une série de cellules à pressions/températures étagées, dans lesquelles circule un fluide de travail présent dans chaque cellule sous forme de vapeur saturante en contact avec son liquide. Il existe en outre, au moins dans certaines cellules, un ou plusieurs faisceaux de chauffe ou de refroidissement, qui mettent les cellules en relation avec des fluides caloporteurs qui y apportent la chaleur d'une source productrice ou extraient la chaleur destinée à une zone de consommation. Enfin, chaque cellule est mise en relation avec les cellules voisines, d'une part, sur le trajet de la vapeur, par un compresseur ou par une turbine selon que la chaleur primaire entrant dans le processus est disponible en moyenne à haut niveau de température ou à bas niveau, la vapeur montant ou descendant les niveaux de pression/température, et, d'autre part, sur le trajet du liquide, qui circule en sens inverse de la vapeur et en quantité égale par un orifice calibré pour descendre les niveaux de pression/température ou par une pompe pour les remonter. Il suffira à l'homme de l'art de se reporter aux descriptions des brevets cités ci-dessus pour connaître la structure et le fonctionnement de telles machines.

Dans le cas où le fluide caloporteur apporte de la chaleur (il circule alors en traversant en série les étages dans le sens des températures décroissantes), de la vapeur du fluide de travail est produite par ébullition du liquide présent dans la cellule, et, dans le cas contraire, de la vapeur du fluide de travail se condense. Ainsi, les débits de vapeur et de liquide évoluent d'étage en étage selon les quantités de chaleur apportées ou sous-traites en fonction de la loi Q(T) selon laquelle l'apport ou l'extraction de chaleur sont réalisés, c'est-à-dire pratiquement en fonction du dimensionnement des faisceaux d'échange.

Il est important de noter qu'à l'interface entre deux cellules successives la somme des débits du fluide de travail entrant sous forme de vapeur ou sous forme de liquide est toujours égale à la somme des débits de ce même fluide de travail sortant sous forme de liquide ou sous forme de vapeur, les débits de vapeur ou de liquide circulant en sens inverse étant toujours égaux.

On peut remarquer que les machines polytropiques décrites dans les brevets précités peuvent être formées à partir de suites élémentaires simples dont quatre seront utilisées dans ce qui suit, à savoir:

— suite à compresseurs refroidie, utilisée pour un "processus de condensation avec travail absorbé"

— suite à compresseurs réchauffée, utilisée pour un "processus d'ébullition avec travail absorbé"

— suite à turbines refroidie utilisée pour un "processus de condensation avec travail fourni"

— suite à turbines rèchauffée, utilisée pour un "processus d'ébullition avec travail fourni".

Ces quatre types élémentaires de suites comportent toutes un étage d'extrémité ouvert où entrent et sortent les débits liquides et vapeur du fluide de travail, et un étage d'extrémité fermé où le fluide de travail est soit totalement vaporisé, soit totalement condensé.

Le tableau suivant indique le côté où se trouve l'étage ouvert, les entrées et sorties du fluide de travail vis-à-vis de la suite considérée, ainsi que la direction de circulation du fluide caloporteur.

| Type de suite | Etage ouvert | Fluide de travail | Direction du fluide caloporteur |
|---|---|---|---|
| Suite à compresseurs réchauffée | plus haute température | entre liquide sort vapeur | températures décroissantes |
| Suite à compresseurs refroidie | plus basse température | entre vapeur sort liquide | températures croissantes |
| Suite à turbines réchauffée | plus basse température | entre liquide sort vapeur | températures décroissantes |
| Suite à turbines refroidie | plus haute température | entre vapour sort liquide | températures croissantes |

Dans ces systèmes, le fluide caloporteur peut traverser plusieurs étages successifs, ou un seul étage. On peut à la limite avoir un circuit caloporteur de même nature par étage d'une suite déterminée.

A titre de document illustrant la technique antérieure, on peut également citer le brevet français Leybold 1 347 558. Ce brevet décrit un procédé et un dispositif pour la récupération des constituants volatils d'une matière soumise à une lyophilisation. Le procédé comprend un processus de condensation à étage. Les condenseurs sont refroidis à une température différente, et sont mis en communication les uns à la suite des autres. Il n'y a par ailleurs aucune autre communication. Il s'agit donc d'une simple opération de condensation étagée.

L'invention revendiquée a pour objet un procédé qui combine et associe, d'une manière précise, un processus de condensation à température étagée avec un processus d'ébullition à travail extérieur, procédé dans lequel les processus comprennent le même nombre d'étages, et où les étages homologues échangent de la chaleur.

Le brevet Leybold associe à chaque étage du processus de condensation un condenseur qui fixe la température dans l'étage considéré, mais les différents condenseurs sont totalement indépendants les uns des autres au point de vue thermodynamique. En outre, il n'y a aucune relation entre les condensats du processus de condensation et les fluides circulant dans les condenseurs.

La présente invention a pour objet un procédé et un dispositif pour séparer, avec un rendement optimal, une vapeur de fluide condensable contenue dans un gaz non condensable, dans un processus dénommé "processus de démélange".

La présente invention concerne donc un procédé pour séparer un gaz et une vapeur condensable, se trouvant tous deux initialement à haute température, caractérisé en ce qu'on associe:

— un processus en soi connu de condensation à température étagée sans travail extérieur où ledit mélange gaz-vapeur arrivant à haute température circule d'étage en étage en gardant sensiblement constante sa pression, et est refroidi avec condensations partielles successives de la vapeur,

— avec un processus d'ébullition étagée en pression et température avec travail extérieur dont chaque étage est homologue d'un étage du processus de condensation, où chaque étage réchauffé du processus d'ébullition reçoit comme fluide de travail un débit liquide qui y est vaporisé et où les débits vapeur ainsi produits traversent en série les étages en mettant en jeu du travail extérieur et ressortent à un étage d'extrémité, ladite association étant telle que:

— chaque étage du processus d'ébullition reçoit pour son réchauffage la chaleur enlevée à l'étage homologue du processus de condensation, la différence de température entre étages homologues de condensation et d'ébullition étant juste suffisante pour permettre d'assurer les échanges de chaleur,

— les condensats produits dans les étages du processus de condensation sont envoyés comme fluide de travail dans le processus d'ébullition pour y être vaporisés, ce qui conduit à récupérer à la sortie de l'un des étages d'extrémité un débit de vapeur, dont la masse correspond à la masse du liquide condensé et à celle de la vapeur contenue à l'origine dans le mélange, tandis qu'on récupère le gaz débarrassé de la majeure partie de la vapeur qu'il contenait à l'origine.

Pour illustrer les caractéristiques essentielles de l'invention, on se placera dans le cas idéal où, d'une part, toutes les opérations thermodynamiques sont parfaites (ce qui implique l'existence d'infinité d'étages, des compresseurs ou des détentes de fluide de travail à rendement unité, des écarts de température d'échange nuls) et, d'autre part, où l'on fait traverser en sens inverse le processus de démélange par le gaz ayant été séparé, mais dans un faisceau d'échange où les échanges de chaleur se font à travers une paroi.

Il est clair que dans cette situation:

1) le gaz n'apporte aucune chaleur sensible: en fait, il est entré saturé à une température T1 et revient sec à la même température.

2) dans un étage de processus de démélange, la chaleur enlevée à un étage de condensation est égale à celle fournie à l'étage homologue d'ébullition et ceci exactement à la même température. Il en résulte que la fraction condensée est exactement égale, dans ces conditions idéales, à la fraction vaporisée.

Si le processus de démélange est avec travail absorbé, l'invention propose un séparateur parfait où le gaz saturé entre à haut niveau de température T1, ressort sec à la même température, tandis que la vapeur sort à une pression égale à la tension de vapeur à la température T1; on a introduit dans le processus un travail égal au travail réversible de démélange.

Si le processus de démélange est avec travail fourni, l'enthalpie de la vapeur contenue dans le mélange a été utilisée de façon telle que son exergie a été transformée intégralement en travail sur l'arbre de la turbine, tandis que son énergie est intégralement présente dans les rejets thermiques de la turbine de l'étage à plus basse pression.

Dans les opérations réelles, où par ailleurs on ne ferait pas remonter le gaz à la température T1, la chaleur transférée du processus de condensation dans le processus d'ébullition serait forcément supérieure à celle nécessaire pour vaporiser des condensats transférés.

Pour que le bilan massique et enthalpique du système soit équilibré, deux variantes sont possibles:

— selon une première variante, on enlève de la chaleur au processus de démélange par un circuit caloporteur de chaleur sensible circulant dans le sens des températures croissantes; cela peut se faire aussi bien au niveau de processus de condensation qu'au niveau du processus d'ébullition;

— selon une deuxième variante, on introduit de l'extérieur dans le processus un débit complémentaire du fluide de travail pour y être vaporisé; de préférence, si le processus de démélange est avec travail absorbé, le debit complémentaire sera introduit dans l'étage basse température du processus de condensation, où il parcourera l'intervalle de température en même temps que le condensat; de même, si le processus de démélange est avec travail fourni, le débit supplémentaire sera introduit de préférence dans l'étage à bas niveau du processus d'ébullition.

On a supposé jusqu'ici que le liquide du fluide de travail était introduit dans l'étage ouvert du processus d'ébullition, ce qui impliquait notamment que le condensat circulait d'étage en étage dans le processus de condensation pour être collecté à l'étage d'extrémité de ce processus, homologue de l'étage ouvert d'ébullition; il est possible de procéder différemment pour transférer le condensat de chaque étage du processus de condensation, et l'introduire directement dans l'étage homologue du processus d'ébullition pour y être vaporisé; il va de soi qu'on pourra procéder de cette façon sans sortir de l'invention.

L'invention sera illustrée sans être aucunement limitée par la description ci-après de certains de ses modes de réalisation et de leurs applications, en référence aux dessins annexés sur lesquels:

Fig. 1 est un schéma de principe d'une installation de séparation d'un gaz et d'une vapeur condensable;

Fig. 2 est un schéma correspondant à une variante simplifiée de la figure 1;

Fig. 3 est un schéma illustrant l'application de l'invention au séchage d'un produit;

Fig. 4 est un schéma représentant une variante perfectionnée et rationnelle pour le séchage d'un produit;

Fig. 5 est un schéma correspondant à une variante de la figure 1;

Fig. 6 est un schéma d'une variante simplifiée de la figure 5;

Fig. 7 est un schéma illustrant l'application de l'invention au séchage des gaz sortant d'un électrolyseur à haute température;

Fig. 8 est un schéma d'une installation perfectionnée pour le traitement des effluents gazeux et des affluents d'un électrolyseur à haute température.

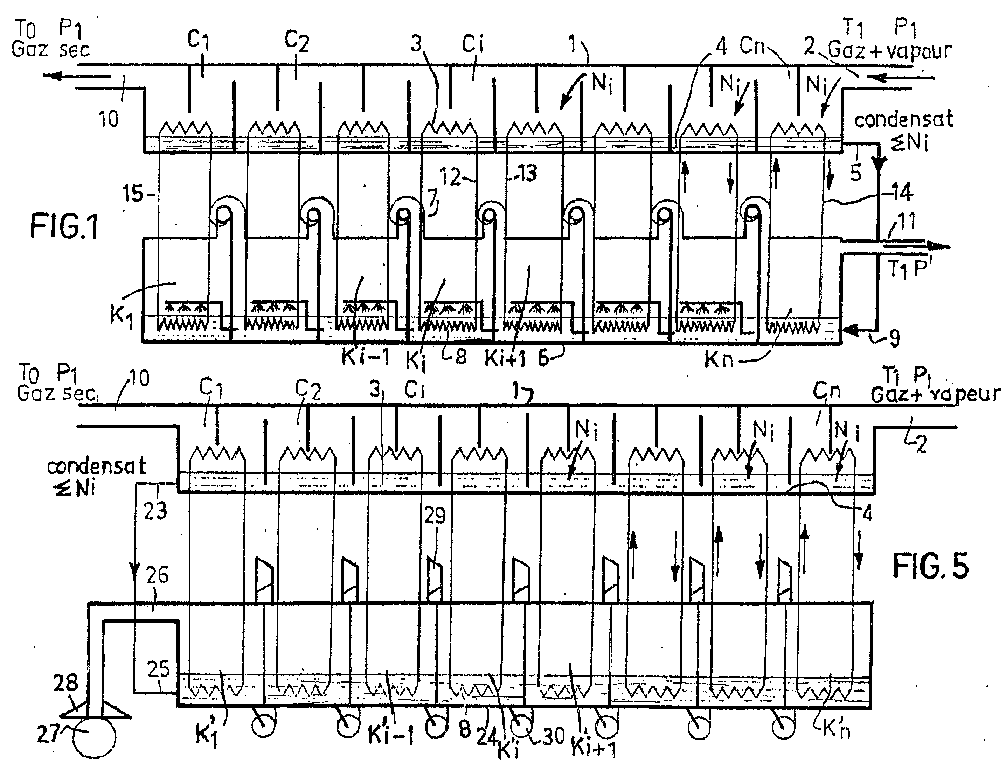

La figure 1 est un schéma de principe d'une installation de séparation d'un gaz et d'une vapeur condensable. Cette installation comprend une suite 1 de $n$ cellules numérotées $C_1$, $C_2$——$C_i$...$C_n$, dans le sens des températures croissantes.

Ces cellules sont toutes à la même pression $P$ et leurs températures sont étagées de $T_1$ à $T_o$, $T_1$ étant la température d'arrivée du mélange gaz + vapeur qui entre dans la cellule $C_n$ par l'orifice 2. Ce mélange parcourt, grâce à des chicanes, chaque cellule en léchant un faisceau réfrigérant 3 parcouru par un débit de fluide caloporteur; ainsi, la vapeur contenue dans le gaz se condense graduellement dans chaque cellule. Les condensats $N_i$ se rassemblent à la partie inférieure de celle-ci et le gaz sec sort par l'orifice 10. Des orifices 4 permettant aux condensats de remonter les températures en se réchauffant jusqu'à la cellule $C_n$, la totalité des condensats $\Sigma N_i$ sortant de la cellule $C_n$ par la tubulure 5. Le débit de fluide traversant chaque cellule $C_i$ est envoyé dans la cellule correspondante $K_i$ d'une suite à compresseurs réchauffée 6 fonctionnant entre les températures $T_q$ et $T_n$ et dont le fluide d'échange est constitué par le fluide condensable provenant de la suite 1.

On illustrera la suite 6 à l'aide d'une cellule quelconque $K_i$.

Un compresseur 7 aspire de façon connue la vapeur de la cellule $K_{i-1}$ de pression/température immédiatement inférieure pour la refouler dans la cellule $K_i$. Un faisceau de chauffe 8 parcourt la cellule $K_i$ pour y vaporiser le fluide parcourant les cellules à l'état liquide en descendant d'étage en étage les niveaux de pression/température. Ce faisceau de chauffe est bouclé en circuit fermé avec le faisceau réfrigérant 3 de la cellule $C_i$ correspondante de la suite 1, une pompe, non représentée, assurant la circulation du fluide caloporteur. Il est clair que les cellules $C_i$ et $K_i$ sont à des températures très voisines, la température de la cellule $K_i$ étant inférieure à celle de la cellule $C_i$ d'une quantité correspondant aux écarts dus aux échanges de chaleur dans les faisceaux 3 et 8 parcourus en série par le fluide caloporteur.

La cellule $K_n$ à température $T_1$ de la suite 6 à compresseurs réchauffée reçoit par la canalisation 9 les condensats provenant de la suite 1 de cellules de condensation $C_1$ à $C_n$. Un faisceau 8 réchauffe chaque cellule $K_i$ en lui apportant la chaleur de condensation recueillie par le faisceau 3 dans la cellule $C_i$ correspondante.

La quantité de vapeur produite dans cette cellule $K_i$, est donc égale à celle de la vapeur condensée dans la cellule $C_i$ et vient s'ajouter à la vapeur amenée par le compresseur 7 correspondant et désurchauffée au contact du liquide. La totalité de la vapeur est entraînée par le compresseur de la cellule voisine $K_{i+1}$ de pression/température plus élevée, de sorte que de la dernière cellule $K_n$ il ressort par la canalisation 11 un débit de vapeur égal au débit de vapeur contenu dans le gaz arrivant en 2.

On remarquera qu'au total, il est entré en 2 une masse A de gaz à la température $T_1$ et à la pression $P_1$ et qu'il ressort en 10 le gaz sec à la pression $P_1$ et en 11 la vapeur à la pression $P_1$ et à la température $T_1$.

Il est clair que si l'on désire, pour réaliser une opération de séchage par exemple, que le gaz sec ressorte également à la température $T_1$, il suffit de la faire passer dans les faisceaux d'échange non représentés et parcourant de préférence la suite de cellules $C_1$ à $C_n$ dans le sens des températures croissantes.

On remarquera que, dans le schéma de la figure 1, les circuits caloporteurs correspondant aux faisceaux 3 et 8 sont destinés à condenser des quantités de vapeur qui ne sont pas forcément égales d'une cellule à la cellule suivante. En particulier, si les écarts de température d'une cellule à la suivante sont identiques, par exemple 15°C, les quantités de vapeur condensée vont en diminuant de la cellule $C_n$ à la cellule $C_1$, de sorte que les débits de fluide caloporteur dans les faisceaux 3 et 8 vont en diminuant du rang $n$ au rang 1. Si, au contraire, ce sont les quantités condensées que l'on désire maintenir constantes, les débits de fluide caloporteur pourraient être identiques. Dans ce cas, les tuyauteries telles que 12 et 13, qui seraient parcourues par des débits égaux et de sens inverse, pourraient être supprimées et, d'une part, tous les faisceaux 3 pourraient être réunis en série dans la suite 1 et, d'autre part, tous les faisceaux 8 réunis en réunis en série dans la suite 6, de sorte que seules les tuyauteries extrêmes 14 et 15 seraient conservées, une seule pompe assurant la circulation de ce débit caloporteur.

Si, comme dit plus haut, ce sont les écarts de température entre cellules que l'on désire maintenir constants, il y a lieu de maintenir entre la cellule $K_i$ et la cellule $C_i$ une seule tuyauterie où l'on fait passer la différence de débits de fluide caloporteur, une pompe aspirant cette différence de débit depuis la liaison prévue entre deux faisceaux consécutifs 8 pour l'amener à la liaison prévue entre les deux faisceaux homologues 3.

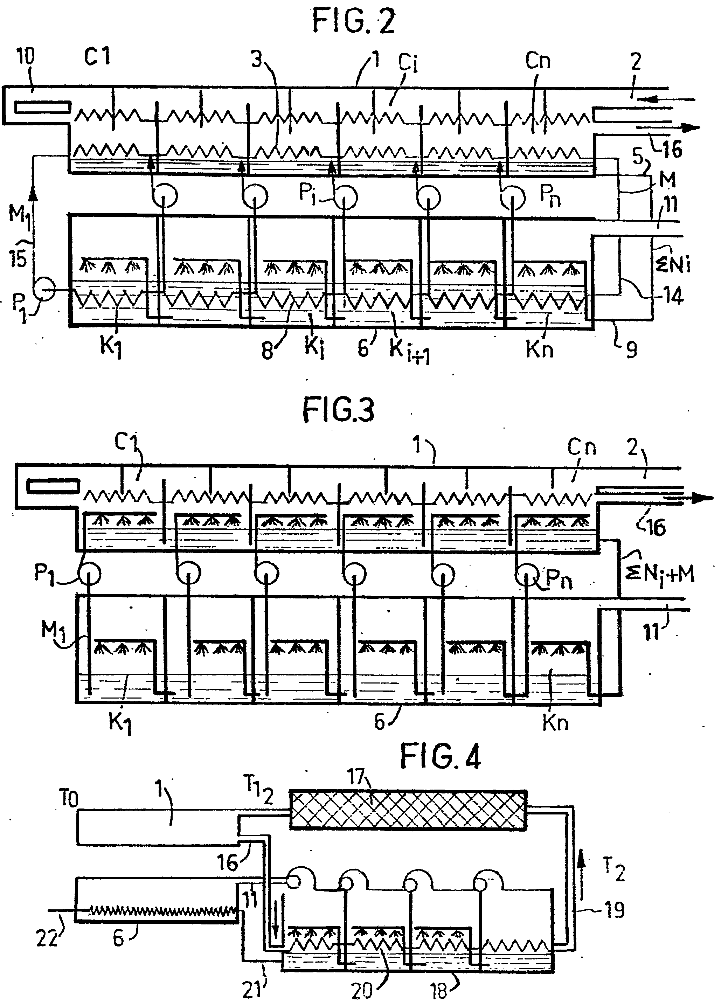

Un telle réalisation est représentée à la figure 2.

Ainsi qu'on le voit à la figure 2, une pompe $P_1$ apporte à la première cellule $C_1$ de la suite 1 le débit caloporteur nécessaire à la condensation du reliquat de vapeur contenu dans le gaz passant dans cette cellule. Les pompes suivantes $P_1 \ldots P_n$ appportent le complément de débit nécessaire à chaque cellule successive. Le débit total de liquide caloporteur passe par la canalisation 14 vers la cellule $K_n$ de la suite 6 à compresseur réchauffée, ces compresseurs n'étant pas figurés pour la clarté de la figure. Sur la figure 2, on a montré les faisceaux d'échange par lesquels le gaz sec remonte les cellules de $C_1$ à $C_n$ pour ressortir par la canalisation 16 à létat $T_1$, $P_1$ de cette suite, comme décrit plus haut.

L'invention s'étend également au cas où, dans la suite 6 à compresseurs et dans la suite 1 de cellules de condensation, le fluide caloporteur est de même nature que le fluide condensable contenu dans le gaz. Dans ce cas, les faisceaux de condensation 3 peuvent être remplacés par un système de condensation par mélange, par exemple, par la pulvérisation dans les cellules $C_1$ à $C_n$ du fluide condensable prélevé dans les cellules $K_1$ à $K_n$ par des pompes $P_1$ à $P_n$ dont le rôle et le débit sont les mêmes que ceux décrits plus haut en référence à la figure 2.

Dans ce cas, les canalisations (5, 9) de retour du condensat et (14) de retour du débit caloporteur peuvent être confondues. pour y transporter les quantités $\Sigma N_i$ condensées et M de réfrigération. Dans ce cas également, le retour du liquide condensable d'une cellule $K_i$ par le "flash" est accru d'une façon très importante par le débit caloporteur servant à la production de vapeur de la cellule.

Un cas particulièrement intéressant, illustré à la figure 3, est celui du séchage d'un produit.

A la figure 3, le gaz humide provenant d'une chambre de séchage entre dans la suite 1 par la canalisation 2 à la température $T_1$. Pour les besoins du séchage, il convient de réchauffer ce gaz sortant par la canalisation 16 pour lui apporter au moins la quantité de chaleur nécessaire à l'evaporation de l'eau contenue dans le produit à sécher. Il suffit de se reporter à la figure 3 où les mêmes chiffres de référence qu'à la figure 2 ont été utilisés.

L'invention a aussi pour objet un procédé de séchage tout à fait rationnel, en tirant profit du fait que la chaleur latente, nécessaire à l'évaporation de l'eau contenue dans le produit à sécher, est contenue dans la vapeur sortant par la canalisation 11 de la suite 6 à compresseurs réchauffée.

Selon l'invention, on peut alors faire entrer le débit de vapeur sortant de 11 comme fluide de travail dans une suite à compresseurs refroidie, où le fluide caloporteur à réchauffer sera le gaz sec sortant de la canalisation 16.

La figure 4 représente schématiquement une telle réalisation, où les éléments principaux de la figure 3, c'est-à-dire la suite 1 de cellules de condensation et la suite 6 à compresseurs réchauffée ne sont représentées que par des rectangles.

Les matières à sécher sont contenues dans une chambre de séchage 17. Les gaz humides sortant en 2 entrent dans la suite 1 de cellules de condensation, en sortent secs en 16 et sont introduits dans une suite 18 de compresseurs refroidie d'où ils ressortent chauds en 19. La vapeur sortant par la canalisation de la suite 6 à compresseurs réchauffée décrite plus haut et dont la masse est égale à la masse de vapeur contenue dans le gaz humide, condensée en 1 et revaporisée en 6 comme vu plus haut, entre comme fluide de travail dans la suite 18 à compresseurs et s'y condense progressivement en réchauffant le gaz sec passant dans les faisceaux 20 et ressortant de la suite en 19. Les condensats retournent progressivement en "flashant" successivement d'une cellule à l'autre de la suite 18 et ressortent de façon connue en 21 à la température $T_1$ égale à la température d'entrée de la vapeur passant dans la canalisation 11.

Ces condensats pourront avantageusement repasser dans la suite 6 à compresseurs réchauffée pour y apporter leur chaleur sensible et en ressortir froids en 22.

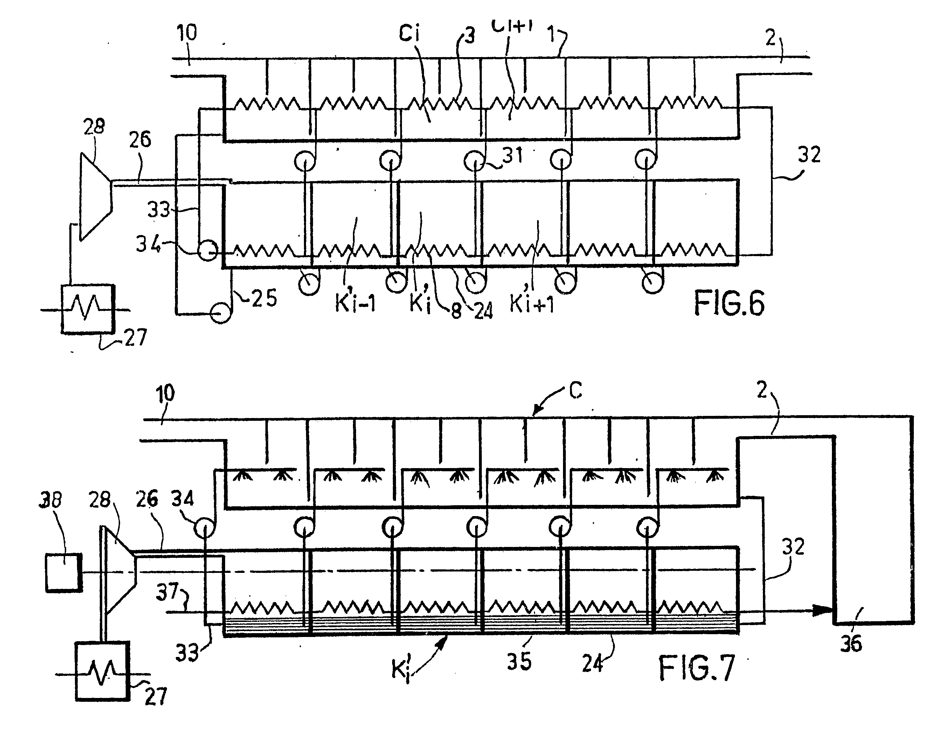

La figure 5 est un schéma de principe d'une autre variante d'installation de séparation d'un gaz et d'une vapeur condensable. Cette installation comprend, comme celle présentée en figure 1, une suite 1 de $n$ cellules, numérotées de $C_1$ à $C_n$ dans le sens des températures croissantes $T_o$ à $T_1$, ladite suite 1 constituant de la même façon un séparateur isobare à pression étagée, le gaz entrant par l'orifice 2 et sortant sec par la canalisation 10. Des faisceaux réfrigérants 3 traversent chaque cellule de la même façon que précédemment. Ils sont parcourus par un débit de fluide caloporteur de sorte que la vapeur se condense graduellement dans chaque cellule et que les condensats se rassemblent à la partie inférieure. Des orifices 4 permettent aux condensats de passer d'une cellule à l'autre en direction des cellules à basse température pour sortir par la canalisation 23. La totalité des condensats est ensuite envoyée comme fluide de travail dans une suite 24 à turbines réchauffée ayant le même nombre de cellules $K'_1 \ldots K'_i \ldots K'_n$, que le séparateur et fonction-nant entre les températures $T_o$ et $T_1$, et dont chaque cellule $K'$ est parcourue par un faisceau de chauffe 8 bouclé en circuit fermé avec le faisceau réfrigérant 3 de la cellule correspondante du séparateur 1.

Le condensat entrant en 25 dans la suite 24 à turbines est progressivement vaporisé, la vapeur, produite dans chaque cellule $K'_i$, passant dans un étage de turbine 29 pour être admise dans la cellule $K'_{i-1}$ de pression/tempé-rature immédiatement inférieure, tandis que le condensat est pompé grâce à une pompe 30 de cellule en cellule vers la cellule $K'_{i+1}$ de pression/température immédiatement supérieure. La vapeur produite sort en 26 pour être envoyée dans un condenseur 27, éventuellement à travers une turbine 28.

L'ensemble des turbines est accouplé à un arbre directement ou par l'intermédiaire de réducteurs de façon par exemple à entraîner une génératrice de courant électrique couplée au réseau général.

On remarquera que la quantité de vapeur produite dans une cellule $K'_i$ de la suite à turbines est égale à la quantité de vapeur condensée dans la cellule homologue $C_i$ du séparateur, et que, au total, on a produit, à partir du gaz chargé de vapeur à température $T_1$ et à la pression $P_1$, d'une part du gaz sec à la tem-pérature $T_o$ et à la même pression $P_1$, et d'autre part de l'énergie utilisable sur l'arbre des turbines.

Ainsi qu'on l'a déjà montré à propos du séparateur accouplé à une suite à compresseurs, le débit de fluide caloporteur destiné à transférer la quantité de chaleur de condensation du séparateur 1 à la suite 24 à turbines varie de cellule en cellule. La figure 6 montre une variante simplifiée applicable au cas où les fluides caloporteurs sont de même nature.

Selon la variante représentée figure 6, on pompe d'une cellule $K'_i$ à une cellule $C_i$ la diffé-rence des débits caloporteurs et on réunit d'une part tous les faisceaux réfrigérants situés dans le séparateur 1 entre eux et d'autre part tous les faisceaux chauffants situés dans la suite 24 à turbines entre eux. La pompe 31 prélève du fluide caloporteur entre le faisceau chauffant 8 de la cellule $K'_i$ et celui de la cellule $K'_{i+1}$ et le refoulant dans la tuyauterie reliant les faisceaux 3 de la cellule $C_i$ et de la cellule $C_{i+1}$ du séparateur.

La figure 6 représente également deux tuyauteries extrêmes 32 et 33 qui relient l'ensemble des faisceaux réfrigérants et l'ensemble des faisceaux chauffants, d'une part, directement du côté des hautes températures et, d'autre part, par une pompe 34 du côte des plus basses températures.

Sur la figure 6, on a omis, pour la clarté, de représenter les turbines entre étages.

De façon analogue à ce qui a été décrit dans le cas de l'association d'un séparateur à températures étagées et d'une suite à compresseurs réchauffée, si le fluide caloporteur est de même nature que le fluide condensable contenu dans le gaz, on aboutit à la disposition de la figure 7 où la condensation dans les cellules C s'opère par mélange et où le chauffage se fait directement en envoyant le fluide caloporteur par la tuyauterie 32. A la figure 7, les éléments analogues à ceux de la figure 6 sont désignés par les mêmes références.

Le débit de fluide caloporteur étant notablement plus grand que la quantité condensée, celle-ci n'est plus entraînée dans ce cas vers les basses températures mais vers les hautes températures et, d'autre part, dans la suite à turbines, l'ensemble des pompes 30 peut être supprimé. Il sort toujours de la suite à turbines la vapeur produite par la canalisation 26 allant vers la dernière turbine 28 et le condenseur 27.

Dans le cas où le dispositif sert à séparer la vapeur contenue dans un gaz sortant d'un électrolyseur à haute température, la quantité d'eau sortant de l'électrolyseur sous forme de vapeur, ainsi que la quantité d'eau dissociée par électrolyse, doivent être remplacées. Il est avantageux d'introduire cette eau à travers la suite à turbine 24 en la faisant passer par les faisceaux d'échange 35 traversant toutes les cellules de cette suite à turbines. Il s'ensuit que la quantité de chaleur nécessaire à porter l'eau admise à l'électrolyseur à la température d'électrolyse sera prélevée sur la chaleur latente contenue dans la vapeur sortant en mélange avec le ou les gaz produits.

Sur la figure 7, on a représenté par un rectangle 36 l'electrolyseur et par 37 la canalisation d'amenée de la solution à électrolyser.

Il entre ainsi dans l'installation générale d'électrolyse, d'une part, la solution à électrolyser et, d'autre part, l'énergie électrique nécessaire, et il sort d'une part le gaz sous pression froid et sec par la canalisation 10 et d'autre part l'énergie électrique récupérée sur la vapeur sortant de l'électrolyseur par l'ensemble des turbines accouplées à la génératrice représentée par le rectangle 38.

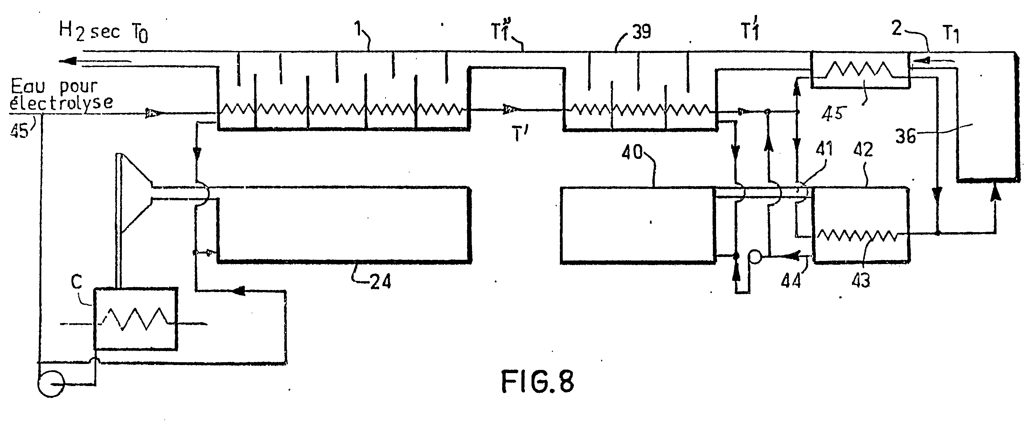

Une installation d'électrolyse, si elle est de très grande capacité, peut être encore améliorée par le mode de réalisation de l'invention qui est illustré à la figure 8 et sera maintenant décrit.

Il faut tenir compte du fait que les gaz sortant de l'electrolyseur contiennent de la vapeur d'eau dont la tension de vapeur correspond à celle d'une solution concentrée d'hydroxyde de sodium ou de potassium constituant l'électrolyte et non à celle de l'eau pure, de sorte que la pression partielle de la vapeur dans le mélange sortant de l'électrolyseur est notablement plus faible que la tension de vapeur saturante en présence d'eau à la même température. Le débit de gaz sortant, dés qu'il n'est plus en présence de l'électrolyte, peut donc être considéré comme contenant de la vapeur surchauffée. Il convient alors de récupérer la chaleur sensible du mélange sortant en le désurchauffant dans un échanger avant de réaliser la séparation, ce qui conduit à refroidir les gaz de la température $T_1$ à la sortie de l'électrolyseur à une température $T'_1$ correspondant à la tension de vapeur saturante en présence d'eau.

Le processus de démélange est ainsi alimenté à la temperature $T'_1$ inférieure à $T_1$ et l'eau d'alimentation de l'electrolyseur sortira de ce processus à $T'_1$, ce qui nécessite son réchauffage à $T_1$ pour l'introduire dans l'électrolyseur.

Selon le mode de réalisation de l'invention, le processus de démélange sera divisé en deux parties, l'une dénommée "processus à bas niveau", comprennant, comme défini précédement, un séparateur associé à une machine polytropique constituée par une suite à turbines réchauffée, ledit processus fonctionnant entre la température $T_o$ du condenseur et une température $T''_1$ inférieure à $T'_1$.

L'autre partie du démélange, dénommée "processus à haut niveau", fonctionnera entre $T'_1$ et $T''_1$ et comprendra un séparateur associé à une machine polytropique constituée par une suite à compresseurs réchauffée analogue à celui du processus de séchage décrit précédemment, la vapeur sortant de cette suite à compresseurs réchauffée étant utilisée dans une suite à compresseurs refroidie traversée par une partie de l'eau d'alimentation de l'electrolyseur qui s'y réchauffe, l'autre partie traversant l'échangeur-désurchauffeur précité où elle s'y réchauffe également de la même quantité.

Moyennant un choix correct de la température $T''_1$, on peut ainsi récupérer entièrement l'enthalpie contenue dans les effluents d'électrolyse, l'énergie fournie par la suite à turbines étant bien supérieure à l'énergie nécessitée par la suite à compresseurs située à plus haut niveau.

La figure 8 est un schéma général d'une installation d'électrolyse fonctionnant de la sorte, où le processus à bas niveau est constitué par le séparateur 1 et la suite à turbines 24, fonctionnant entre les températures $T''_1$ et $T_o$, $T_o$ étant la température du condenseur C. L'ensemble est alimenté par le gaz d'électrolyse à la température $T''_1$ et saturé d'eau et rejette à $T_o$ ce gaz contenant la très faible quantité d'eau correspondant à la pression partielle de vapeur d'eau saturante à $T_o$.

Le gaz sortant de l'électrolyseur 36 à la température $T_1$ par la canalisation 2 traverse d'abord un échangeur 45 où il se désurchauffe jusqu'à la température $T'_1$ puis entre dans le processus séparation à haut niveau constitué par un séparateur 39 et une suite à compresseurs réchauffée 40, l'étage ouvert de cette suite rejetant de la vapeur en masse égale à la masse d'eau condensée par la canalisation 41. Celle-ci alimente une suite à compresseurs refroidie 42 destinée à réchauffer une partie de l'eau d'alimentation qui la traverse par le faisceau d'échange 43, l'autre partie de l'eau d'alimentation passant dans l'échangeur 45. L'ensemble de l'eau d'alimentation est constitué d'une part par l'eau condensée sortant de la suite à compresseurs refroidie 42 par la conduite 44 et d'autre part par les condensats provenant de la suite à turbines 24 du condenseur C qui, joints à la quantité d'eau à électrolyser arrivant par la conduite 45, traversent l'ensemble des étages des séparateurs 1 et 39 pour s'y réchauffer.

L'invention a été illustrée précédemment dans certaines de ses applications. Bien entendu, elle n'est pas limitée aux modes de réalisation décrits, mais elle en couvre, au contraire, toutes les variantes et les modifications équivalentes.

**Revendications**

1. Procédé pour séparer un gaz et une vapeur condensable, se trouvant tous deux initialement à haute température, caractérisé en ce qu'on associe

— un processus en soi connu de condensation à température étagée sans travail extérieur où ledit mélange gaz-vapeur arrivant à haute température circule d'étage en étage en gardant sensiblement constante sa pression, et est refroidi avec condensations partielles successives de la vapeur, avec

— un processus d'ébullition étagée en pression et température avec travail extérieur dont chaque étage est homologue d'un étage du processus de condensation, où chaque étage réchauffé du processus d'ébullition reçoit comme fluide de travail un débit liquide qui y est vaporisé et où les débits vapeur ainsi produits traversent en série les étages en mettant en jeu du travail extérieur et ressortent à un étage d'extrémité, ladite association étant telle que:

— chaque étage du processus d'ébullition reçoit pour son réchauffage la chaleur enlevée à l'étage homologue du processus de condensation, la différence de température entre étages homologues de condensation et d'ébullition étant juste suffisante pour permettre d'assurer les échanges de chaleur;

— les condensats produits dans les étages du processus de condensation sont envoyés comme fluide de travail dans le processus d'ébullition pour y être vaporisés, ce qui conduit à récupérer à la sortie de l'un des étages d'extrémité un débit de vapeur, dont la masse correspond à la masse du liquide condensé et à celle de la vapeur contenue à l'origine dans le mélange, tandis qu'on récupère le gaz, débarassé de la majeure partie de la vapeur qu'il contenait à l'origine.

2. Procédé selon la revendication 1, caractérisé en ce que les condensats circulent en sens inverse de la vapeur, comme fluide de travail dans le processus d'ébullition.

3. Procédé selon l'une des revendications 1 ou 2, caractérisé en ce que les condensats du processus de condensation y circulent d'étage en étage et en sortent à l'extrémité homologue de l'extrémité d'entrée et de sortie des débits liquide et vapeur du fluide de travail du processus d'ébullition, et en ce que lesdits condensats ainsi rassemblés sont introduits comme fluide de travail dans ladite extrémité du processus d'ébullition.

4. Procédé selon la revendication 1, caractérisé en ce que les condensats de chaque étage du processus de condensation sont envoyés directement comme fluide de travail dans les étages homologues dans le processus d'ébullition.

5. Procédé selon l'une quelconque des revendications 1 à 4, caractérisé en ce qu'on fait en outre circuler à travers les étages un fluide caloporteur de chaleur sensible pour équilibrer les bilans massiques et enthalpiques en régime permanent.

6. Procédé selon l'une quelconque des revendications 1 à 4, caractérisé en ce que, pour équilibrer les bilans massiques et enthalpiques en régime permanent, on introduit dans le processus d'ébullition un débit liquide complémentaire du fluide de travail pour qu'il soit vaporisé.

7. Procédé selon l'une quelconque des revendications 1 à 6, caractérisé en ce que le processus d'ébullition associé au processus de condensation étant du type processus d'ébullition avec travail fourni, on récupère l'enthalpie utilisable du mélange sous forme d'énergie mécanique et on condense la vapeur sortant de l'étage se trouvant à la température la plus basse du système.

8. Procédé selon l'une quelconque des revendications 1 à 6, caractérisé en ce que le processus d'ébullition associé au processus de condensation étant du type processus d'ébullition avec absorption de travail extérieur, on récupère l'enthalpie utilisable du mélange sous forme d'un flux de vapeur à une température voisine de celle du mélange gaz-vapeur incident.

9. Application du procédé selon la revendication 8, au séchage du produit dans un sécheur caractérisée en ce qu'on associe ledit procédé, également dénommé ci-après processus de démélange, avec un processus de condensation avec travail absorbé, cette association étant telle que

— le flux de vapeur sortant du processus de démélange entre dans le processus de condensation avec travail absorbé où il se condense progressivement,

— le debit liquide sortant du processus de condensation avec travail absorbé entre dans l'étage à haute température $(T_1)$ du processus de démélange, traverse des étages de ce processus dans le sens des températures décroissantes et sort de son étage au plus bas niveau à une température voisine de celle régnant dans cet étage,

— le gaz issu du sécheur et chargé d'humidité à la température $T_1$ sort à bas niveau de température $T_o$ du processus de démélange, retraverse dans les sens des températures croissantes, en échangeant sa chaleur sensible à travers une paroi, d'une part le processus de démélange d'où il sort à une température voisine de $T_1$, d'autre part le processus de condensation avec travail absorbé et en sort sec de l'étage à plus haut niveau de ce dernier processus à une température $T_2$ notablement supérieure à celle $T_1$ qu'il avait en entrant humide, pour y être envoyé dans le sécheur de sorte qu'au total le gaz circule en circuit fermé et que la chaleur nécessaire au séchage est récupérée.

10. Application du procédé selon la revendication 7, pour traiter les effluents et affluents de l'électrolyse de l'eau, caractérisé en ce qu'on met en oeuvre un processus de démélange conforme audit procédé, où l'on fait entrer le gaz en provenance de l'électrolyseur à l'étage à plus haut niveau de température $(T_1)$ et où l'on fait passer dans les étages successifs du processus dans le sens des températures croissantes le condensat du processus en même temps que la quantité d'eau à électrolyser pour les envoyer vers l'électrolyseur.

11. Application du procédé selon la revendication 8, pour traiter les effluents et affluents d'un électrolyseur d'eau, caractérisée en ce qu'on associe un processus de démélange conforme audit procédé avec, d'une part, un échangeur gaz-liquide et, d'autre part, un processus de condensation avec travail absorbé, de telle sorte que le gaz contenant de la vapeur surchauffée à la sortie de l'électrolyseur se refroidit dans l'échangeur et se sature en échangeant sa chaleur sensible à contre-courant avec une partie de débit d'eau d'alimentation de l'électrolyseur, que le gaz ainsi saturé traverse ledit processus de démélange, parcouru dans le sens des températures croissantes par une partie de l'eau d'alimentation, et que la vapeur sortant du processus de démélange entre dans le processus de condensation avec travail absorbé pour réchauffer l'autre partie du débit d'eau d'alimentation, le condensat de cette vapeur qui sort du processus de condensation avec travail absorbé, ajouté à l'eau d'alimentation ayant traversé le processus de démélange, constituant l'ensemble du débit d'eau d'alimentation de l'électrolyseur, que l'on départage de façon telle que la partie qui traverse l'échangeur est ajustée pour équilibrer thermiquement les échanges et que le reste traverse en se réchauffant le processus de condensation avec travail absorbé, ces débits partiels sortant sensiblement à la même température $T_1$ et étant alors retournés à l'électrolyseur.

12. Application selon les revendications 10 et 11, caractérisée en ce qu'on associe un processus selon la revendication 10, dénommé processus à bas niveau, avec un processus selon la revendication 11, dénommé processus à haut niveau, de telle sorte que le gaz issu du processus à haut niveau alimente le processus à bas niveau et que l'eau réchauffée sortant du processus à bas niveau est introduite dans le processus à haut niveau pour y être réchauffée.

**Claims**

1. A process for separating a gas and a condensable vapour both initially being at high temperature, characterised by associating: a process known per se of condensation at staged temperatures without external work in which the said gas-vapour mixture incoming at high temperature flows from stage to stage while keeping its pressure substantially constant, and is cooled with successive partial condensations of the vapour, with a process of ebullition staged in pressure and temperature with external work each, stage of which is a counterpart of a stage of the process of condensation, in which each heated stage of the process of ebullition receives as a working fluid a liquid flow which is vapourised therein and in which the vapour flows thus produced go through the stages in series, bringing into play external work, and exit at an end stage, the said association being such that: each stage of the process of ebullition receives for its heating the heat removed at the counterpart stage of the process of condensation, the temperature difference between counterpart condensation and ebullition stages being just sufficient to permit the heat exchanges to be ensured; the condensates produced in the stages of the process of condensation are conveyed as working fluid into the process of ebullition to be vapourised therein, which leads to recovering at the outlet of one of the end stages a vapour flow whose mass corresponds to the mass of the condensed liquid and to that of the vapour contained in the mixture at the outset, whilst recovering gas with the major part of the vapour it contained at the outset removed.

2. Process according to claim 1, characterised in that the condensates flow in a direction opposite to the vapour, as working fluid in the process of ebullition.

3. Process according to one of claims 1 and 2, characterised in that the condensates of the process of condensation flow from stage to stage and exit at the counterpart end of the inlet and outlet end for the liquid and vapour flows of the working fluid of the process of ebullition, and in that the said condensates thus collected are introduced as working fluid into the said end of the process of ebullition.

4. Process according to claim 1, characterised in that the condensates of each stage of the condensation process are conveyed directly as working fluid into the counterpart stages in the process of ebullition.

5. Process according to any one of claims 1 to 5, characterised by further causing to flow through the stages a fluid carrying substantial heat for equilibrating mass and enthalpy balances in steady operation.

6. Process according to any one of claims 1 to 4, characterised by, for equilibrating the mass and enthalpy balances in steady operation, introducing into the process of ebullition an additional liquid flow of the working fluid in order that it may be vapourised.

7. Process according to any one of claims 1 to 6, characterised in that, the process of ebullition associated with the process of condensation being of the type of process of ebullition with work supplied, the useful enthalpy of the mixture is recovered in the form of mechanical energy and vapour exiting the stage at the lowest temperature of the system is condensed.

8. Process according to any one of claims 1 to 6, characterised in that, the process of ebullition associated with the process of condensation being of the type of process of ebullition with external work consumed, the useful enthalpy of the mixture being recovered in the form of a flow of vapour at a temperature in the vicinity of that of the incoming gas-vapour mixture.

9. Application of the process according to claim 8 to the drying of the product in a drier, characterised in that the said process, also referred to hereinafter as the dismixing process, is associated with a process of condensation with work consumed, this association being such that the flow of vapour exiting the dismixing process enters the process of condensation with work consumed where it condenses progressively, the liquid flow exiting the process of condensation with work consumed enters the high temperature $(T_1)$ stage of the dismixing process, goes through the stages of this process in the direction of decreasing temperatures and exits its stage at the lowest level at a temperature in the vicinity of that prevailing in this stage, the gas emerging from the drier and loaded with moisture at the temperature $(T_1)$ exits at low level temperature $(T_0)$ from the dismixing process, again goes through in the direction of increasing temperature, exchanging its substantial heat through a wall, on the other hand the dismixing process from which it exits at a temperature in the vicinity of $(T_1)$, on the other hand the process of condensation with work consumed and exits dry from the highest level of this latter process at a temperature $(T_2)$ considerably greater than $(T_1)$ which it had upon entering moist, to be conveyed to the drier so that on the whole the gas flows in a closed circuit and the heat necessary for drying is recovered.

10. Application of the process according to claim 7, for treating the effluents and affluents of the electrolysis of water, characterised in that a dismixing process in conformity with the said process is employed, in which the gas coming from the electrolyser is caused to enter the stage at the highest level of temperature $(T_1)$ and in which the condensate of the process is caused to pass into the successive stages of the process in the direction of increasing temperatures at the same time as the quantity of water to electrolyse to convey them to the electrolyser.

11. Application of the process according to claim 8, for treating the effluents and affluents of a water electrolyser, characterised by associating a dismixing process in conformity with the said process with, on the one hand, a gas-liquid exchanger, on the other hand, a process of condensation with work consumed, so that the gas containing the superheated vapour at the outlet of the electrolyser is cooled in the exchanger and is saturated by exchanging its substantial heat in counter-current with a part of feed water flow of the electrolyser, so that the gas thus saturated goes through the said dismixing process, covered in the direction of increasing temperatures by part of the feed water, and so that the vapour exiting the dismixing process enters the process of condensation with work consumed for heating the other part of the feed water flow, the condensate of this vapour which exits the process of condensation with work consumed, added to the feed water having gone through dismixing process, constituting the entire feed water flow of the electrolyser, which is divided in such a way that the part which goes through the exchanger is adjusted to balance the exchanges thermally and such that the remainder goes through the process of condensation with work consumed while being heated, these partial flows exiting substantially at the same temperature $(T_1)$ and then being returned to the electrolyser.

12. Application according to claims 10 and 11, characterised by associating a process according to claim 10, referred to as the low level process, with a process according to claim 11, referred to as the high level process, so that the gas emerging from the high level process supplies the low level process and the heated water exiting the low level process is introduced in the high level process to be heated therein.

**Patentansprüche**

1. Verfahren zur Trennung eines Gases und eines kondensierbaren Dampfes, die sich beide anfänglich bei hoher Temperatur befinden, dadurch gekennzeichnet, daß man einen an sich bekannten Kondensationsprozess bei abgestufter Temperatur ohne äußere Arbeit, bei dem das bei hoher Temperatur ankommende Gas-Dampf-Gemisch von Stufe zu Stufe strömt, wobei sein Druck im wesentlichen konstant bleibt und unter teilweise aufeinanderfolgenden Kondensationen des Dampfes gekühlt wird, mit einem im Druck und in der Temperatur abgestuften, mit äußerer Arbeit durchgeführten Siedeprozess verbindet, in dem jede Stufe einer Stufe des Kondensationsprozesses entspricht, wobei jede aufgeheizte Stufe des Siedeprozesses als Arbeitsmedium eine Flüssigkeitsmenge erhält, die darin verdampft wird, und wobei die in dieser Weise erzeugten Dampfmengen die Stufen nacheinander durchströmen und hierbei äußere Arbeit leisten und in einer Endstufe wieder austreten, wobei die Verbindung so vorgenommen ist, daß jede Stufe des Siedeprozesses für ihre Aufheizung die in der entsprechenden Stufe des Kondensationsprozesses abgezogene Wärme erhält, wobei der Temperaturunterschied zwischen entsprechenden Kondensations- und Siedestufen gerade ausreicht, um die Sicherstellung des Wärmeaustausches zu ermöglichen, die in Stufen des Kondensationsprozesses gebildeten Kondensate als Arbeitsmedium in den Siedeprozess geführt werden, um dort verdampft zu werden, was zur Folge hat, daß am Austritt einer der Endstufen eine Dampfmenge zurückgewonnen wird, deren Masse der Masse der kondensierten Flüssigkeit und derjenigen des ursprünglich im Gemisch enthaltenen Dampfes entspricht, während man des vom größeren Teil des ursprünglich darin enthaltenen Dampfes befreite Gas gewinnt.

2. Verfahren nach Anspruch 1, dadurch gekennzeichnet, daß die Kondensate als Arbeitsmedium im Siedeprozess in Gegenrichtung zum Dampf strömen.

3. Verfahren nach Anspruch 1 oder 2, dadurch gekennzeichnet, daß die Kondensate des Kondensationsprozesses darin von Stufe zu Stufe strömen und an dem Ende, das dem Eintritts- und Austrittsende entspricht, Flüssigkeits- und Dampfmengen des Arbeitsmediums des Siedeprozesses daraus austreten, und daß die in dieser Weise vereinigten Kondensate als Arbeitsmedium in das genannte Ende des Siedeprozesses eingeführt werden.

4. Verfahren nach Anspruch 1, dadurch gekennzeichnet, daß die Kondensate jeder Stufe des Kondensationsprozesses unmittelbar als Arbeitsmedium in die entsprechenden Stufen im Siedeprozess eingeführt werden.

5. Verfahren nach Anspruch 1—4, dadurch gekennzeichnet, daß man außerdem eine wärmeabführende Flüssigkeit, die fühlbare Wärme enthält, durch die Stufen umwälzt, um die Stoffbilanz und Wärmebilanz im ständigen Gleichgewicht zu halten.

6. Verfahren nach Anspruch 1—4, dadurch gekennzeichnet, daß man, um die Stoff- und Wärmebilanz im Dauerzustand ausgeglichen zu halten, in den Siedeprozess eine ergänzende Flüssigkeitsmenge des Arbeitsmediums einführt, um diese darin zu verdampfen.

7. Verfahren nach Anspruch 1—6, dadurch gekennzeichnet, daß man aufgrund der Tatsache, daß der mit dem Kondensationsprozess verbundene Siedeprozess ein Siedeprozess mit Arbeitsleistung ist, die verwertbare Enthalpie des Gemisches in Form von mechanischer Energie gewinnt und den aus der sich bei der niedrigsten Temperatur des Systems befindenden Stufe austretenden Dampf kondensiert.

8. Verfahren nach Anspruch 1—6, dadurch gekennzeichnet, daß man, bedingt dadurch, daß der mit dem Kondensationsprozess verbundene Siedeprozess zum Siedeprozesstyp unter Aufnahme äußerer Arbeit gehört, die verwertbare Enthalpie des Gemisches in Form eines Dampfstroms bei einer Temperatur, die in der Nähe derjenigen des eintretenden Gas-Dampf-Gemisches liegt, zurückgewinnt.

9. Anwendung des Verfahrens nach Anspruch 8 auf die Trocknung des Produkts in einem Trockner, dadurch gekennzeichnet, da man den genannten Prozess, auch Entmischungsprozess weiter unten benannt, mit einem Kondensationsprozess mit aufgenommener Arbeit verbindet, wobei die Verbindung so vorgenommen wird, daß der aus dem Entmischungsprozess austretende Dampfstrom in den Kondensationsprozess mit aufgenommener Arbeit eintritt, wo er allmählich kondensiert wird, die Flüssigkeitsmengen aus dem Kondensationsprozess mit aufgenommener Arbeit in die Hochtemperaturstufe ($T_1$) des Entmischungsprozesses eintritt, die Stufen dieses Prozesses in Richtung sinkender Temperaturen durchströmt und seine niedrigste Stufe bei einer Temperatur nahe derjenigen, die in dieser Stufe herrscht, verlässt, das aus dem Trockner austretende und mit Feuchtigkeit beladene Gas bei der Temperatur $T_1$ bei niedriger Temperaturhöhe $T_0$ den Entmischungsprozess verlässt, erneut in Richtung steigender Temperaturen unter Austausch seiner fühlbaren Wärme durch eine Wand einerseits den Entmischungsprozess durchströmt, aus dem er bei einer Temperatur in der Nähe von $T_1$ austritt, und andererseits den Kondensationsprozess mit aufgenommener Arbeit durchströmt und diesen Prozess trocken aus der höchsten Stufe des letztgenannten Prozesses bei einer Temperatur $T_2$ verlässt, die wesentlich über der Temperatur $T_1$ liegt, die er beim Eintritt im feuchten Zustand hatte, und dann in den Trockner eingeführt wird, so daß das Gas insgesamt im geschlossenen Kreislauf umläuft und die für die Trocknung notwendige Wärme zurückgewonnen wird.

10. Anwendung des Verfahrens nach Anspruch 7 für die Behandlung der Zuflüsse und Abflüsse der Elektrolyse von Wasser, dadurch gekennzeichnet, daß man einen Entmischungsprozess gemäss dem genannten Verfahren einsetzt, wobei man das aus dem Elektrolyseur kommende Gas in die Stufe mit dem höchsten Temperaturniveau ($T_1$) einführt und in die aufeinanderfolgenden Stufen des Prozesses in Richtung steigender Temperaturen das Kondensat des Prozesses gleichzeitig mit der zu elektrolysierenden Wassermenge führt und sie dem Elektrolyseur zuführt.

11. Anwendung des Verfahrens nach Anspruch 8 für die Behandlung der Zuflüsse und Abflüsse der Elektrolyse von Wasser, dadurch gekennzeichnet, daß man einen Entmischungsprozess gemäss dem genannten Verfahren einerseits mit einem Gas-Flüssigkeits-Austauscher und andererseits einem Kondensationsprozess mit aufgenommener Arbeit so verbindet, daß das Gas, das überhitzten Dampf am Austritt des Elektrolyseurs enthält, sich im Austauscher abkühlt und unter Austausch seiner fühlbaren Wärme im Gegenstrom mit einem Teil der Speisewassermenge des Elektrolyseurs aufsättigt, das in dieser Weise gesättigte Gas den Entmischungsprozess durchströmt, der in Richtung steigender Temperaturen durch einen Teil des Speisewassers durchflossen wird, und der aus dem Entmischungsprozess austretende Dampf in den Kondensationsprozess mit aufgenommener Arbeit eintritt und hierbei den anderen Teil der Speisewassermenge aufheizt, wobei das Kondensat dieses Dampfes, das den Kondensationsprozess mit aufgenommener Arbeit verlässt, nach Zusatz zu dem Speisewasser, das den Entmischungsprozess durchlaufen hat, die Gesamtmenge des Speisewassers des Elektrolyseurs darstellt, die man so aufteilt, daß der Teil, der den Austauscher durchläuft, so eingestellt ist, daß die Austäusche ins thermische Gleichgewicht gebracht werden, und der Rest den Kondensationsprozess mit aufgenommener Arbeit durchläuft, während er sich aufheizt, und diese Teilmengen im wesentlichen bei der gleichen Temperatur $T_1$ austreten und anschließend in den Elektrolyseur zurückgeführt werden.

12. Anwendung des Verfahrens nach Anspruch 10 und 11, dadurch gekennzeichnet, daß man einen als Prozess mit niedrigem Niveau bezeichneten Prozess nach Anspruch 10 mit einem als Prozess mit hohem Niveau bezeichneten Prozess nach Anspruch 11 so verbindet, daß das aus dem Prozess mit hohem Niveau austretende Gas den Prozess mit niedrigem Niveau speist und das aus dem Prozess mit niedrigem Niveau austretende aufgeheizte Wasser in den Prozess mit hohem Niveau eingeführt und dort aufgeheizt wird.

0 007 835

$T_0$ $P_1$ Gaz sec — $C_1$ — $C_2$ — 3 — $C_i$ — 1 — $N_i$ — 4 $C_n$ — 2 $T_1$ $P_1$ Gaz + vapeur

10 — condensat $\Sigma N_i$

**FIG.1**

15 — 12 — 13 — 3 — 5 — 14 — 11 — $T_1$ $P'$

$K_1$ — $K_{i-1}$ — $K_i$ — 8 — $K_{i+1}$ — 6 — $K_n$ — 9

$T_0$ $P_1$ Gaz sec — 10 — $C_1$ — $C_2$ — 3 — $C_i$ — 1 — $N_i$ — $C_n$ — $T_i$ $P_i$ Gaz + vapeur — 2

condensat $\Sigma N_i$ — 23 — 29 — 4

26 — **FIG.5**

28 — 25 — $N_i$

27 — $K'_1$ — $K_{i-1}$ — 8 — 24 — $K'_i$ — 30 — $K_{i+1}$ — $K'_n$

## FIG. 2

## FIG.3

## FIG. 4

FIG.6

FIG.7

0 007 835

FIG.8

H₂ sec T₀

Eau pour électrolyse

45'

T₁

2

36

45

41  42

43

44

T'₁

39

40

T''₁

T'

1

24

C

4